# EUROPÄISCHE PATENTSCHRIFT

(11) **EP 3 517 328 B1**
(45) Veröffentlichungstag und Bekanntmachung des Hinweises auf die Patenterteilung: **17.11.2021**
(21) Anmeldenummer: 19152249.9
(22) Anmeldetag: 17.01.2019
(51) Int. Cl.: B60D 1/48, B60D 1/54, B60D 1/62, B60D 1/06

(54) **ANHÄNGEKUPPLUNG**
TRAILER COUPLING
ATTELAGE DE REMORQUE

(30) Priorität: 29.01.2018 DE 102018101887
(43) Veröffentlichungstag der Anmeldung: 31.07.2019
(73) Patentinhaber: ACPS Automotive GmbH, 71706 Markgröningen (DE)
(72) Erfinder: Holz, Christian, 70736 Fellbach (DE)
(74) Vertreter: Hoeger, Stellrecht & Partner Patentanwälte mbB

(56) Entgegenhaltungen:
- EP-A1- 0 012 600
- EP-A1- 2 316 670
- EP-A2- 1 995 550
- DE-A1-102008 039 807
- DE-C1- 10 061 491
- US-A- 6 079 728

## Beschreibung

Die Erfindung betrifft eine Anhängekupplung umfassend eine an einem Heckbereich einer Fahrzeugkarosserie eines Personenkraftwagens montierbare und sich quer zu einer Längsrichtung der Fahrzeugkarosserie erstreckende Querträgereinheit und eine von der Querträgereinheit gehaltene Lagereinheit mittels welcher ein Kugelhals mit einer Kupplungskugel an der Querträgereinheit gehalten ist, wobei die Querträgereinheit in ihren beiden äußeren, einander gegenüberliegenden Endbereichen mit Montageelementen verbunden ist, mit welchen eine Fixierung der Querträgereinheit an dem Heckbereich erfolgt, wobei die Querträgereinheit eine in vertikaler Richtung gesehen obenliegende Tragstruktur und eine in der vertikalen Richtung tiefer als die obenliegende Tragstruktur angeordnete untenliegende Tragstruktur aufweist, und wobei die Tragstrukturen an ihren einander gegenüberliegenden äußeren Endbereichen jeweils mit den Montageelementen verbunden sind und in einem Mittelbereich die Lagereinheit tragen.

Derartige Anhängekupplungen sind aus dem Stand der Technik bekannt. So offenbart beispielsweise Dokument EP 2 316 670 A1 eine Anhängekupplung gemäß dem Oberbegriff des Anspruchs 1.

Auch bekannt sind Anhängekupplungen mit einer fachwerkartigen Rohrstruktur, wie sie beispielsweise im Dokument DE 10 2008 039807 A1 gezeigt werden.

Bei diesen Anhängekupplungen wird üblicherweise ein Querträgerrohr als Querträgereinheit eingesetzt, an welchem die Lagereinheit gehalten ist.

Um die erforderlichen Kräfte aufzunehmen, muss ein derartiges Querträgerrohr massiv ausgebildet werden und hat daher eine große Masse.

Aus Energiespargründen besteht daher die Forderung, eine derartige Querträgereinheit derart zu verbessern, dass deren Masse bei gleichbleibender Stabilität geringer ist.

Diese Aufgabe wird bei einer Anhängekupplung der eingangs beschriebenen Art erfindungsgemäß dadurch gelöst, dass eine der Tragstrukturen als schwerpunktmäßig torsionssteife, einen Strukturinnenraum mindestens teilweise umschließende Tragstruktur ausgebildet ist, dass die torsionssteife Tragstruktur zumindest abschnittsweise rohrförmig ausgebildet ist, und dass die andere der Tragstrukturen als schwerpunktmäßig in Fahrtrichtung zugsteife Tragstruktur ausgebildet ist, dass die zugsteife Tragstruktur als flächenhafte Tragstruktur ausgebildet ist, die quer zur vertikalen Richtung verläuft, und dass die zugsteife Tragstruktur an den äußeren Endbereichen eine größere Flächenausdehnung in einer horizontalen Längsrichtung aufweist als in dem Mittelbereich.

Der Vorteil der erfindungsgemäßen Lösung ist darin zu sehen, dass durch die Aufteilung der Tragstrukturen in eine schwerpunktmäßig torsionssteife Tragstruktur und eine andere, in Fahrtrichtung schwerpunktmäßig zugsteife Tragstruktur die Möglichkeit geschaffen wurde, insgesamt das Gewicht der Querträgereinheit zu reduzieren, ohne dass Nachteile hinsichtlich der Gesamtstabilität der Querträgereinheit auftreten.

Dabei dienen sowohl die schwerpunktmäßig torsionssteife Tragstruktur als auch die Schwerpunktmäßig in Fahrtrichtung zugsteife Tragstruktur zusätzlich noch dazu, auf die Anhängekupplung wirkenden Kräfte in vertikaler Richtung als auch in einer horizontalen Querrichtung aufzunehmen und außerdem nimmt auch die schwerpunktmäßig torsionssteife Tragstruktur in Fahrtrichtung wirkende Kräfte auf, in gleicher Weise wie auch die schwerpunktmäßig in Fahrtrichtung zugsteife Tragstruktur Torsionskräfte aufnimmt, allerdings in relativ zur anderen Tragstruktur jeweils in reduziertem Maße.

Ferner ist vorzugsweise vorgesehen, dass ein Abstand der Tragstrukturen zwischen den außenliegenden Endbereichen derselben minimal und zwischen den Mittelbereichen maximal ist.

Eine besonders günstige Lösung sieht vor, dass der Mittelbereich der obenliegenden Tragstruktur in vertikaler Richtung höher liegt als deren außenliegende Endbereiche.

Ferner ist es aus Gründen der Lastaufnahme günstig, wenn die obenliegende Tragstruktur zwischen deren außenliegenden Endbereichen näherungsweise bogenförmig verläuft.

Zur Abstützung der auf die obenliegende Tragstruktur wirkenden Kräfte in vertikaler Richtung ist es außerdem günstig, wenn die obenliegende Tragstruktur ausgehend von deren äußeren Endbereichen im Wesentlichen gestreckt in Richtung des Mittelbereichs verläuft.

Ferner wurden hinsichtlich der untenliegenden Tragstruktur ebenfalls bislang keine spezifischen Angaben gemacht.

So ist es günstig, wenn ein Mittelbereich der untenliegenden Tragstruktur in vertikaler Richtung tiefer liegt als deren äußere Endbereiche.

Ferner sieht eine günstige Realisierungsform der untenliegenden Tragstruktur vor, dass diese zwischen den außenliegenden Endbereichen näherungsweise bogenförmig verläuft.

Zur Aufnahme der in vertikaler Richtung wirkenden Kräfte hat es sich ferner als günstig erwiesen, wenn die untenliegende Tragstruktur ausgehend von den äußeren Endbereichen gestreckt in Richtung des Mittelbereichs verläuft.

Hinsichtlich der Ausbildung der torsionssteifen Tragstruktur wurden im Zusammenhang mit der bisherigen Erläuterung der einzelnen Ausführungsformen keine näheren Angaben gemacht.

Besonders günstig ist es, wenn die torsionssteife Tragstruktur über ihre ganze Länge, insbesondere von einem äußeren Endbereich zum anderen äußeren Endbereich, rohrförmig ausgebildet ist.

Insbesondere ist vorgesehen, dass die zugsteife Tragstruktur ausgehend von den äußeren Endbereichen mit zunehmender Erstreckung in Richtung des Mittelbereichs eine abnehmende Ausdehnung in der horizontalen Längsrichtung aufweist.

Insbesondere sieht eine vorteilhafte Lösung vor, dass die zugsteife Tragstruktur im Bereich einer Verbindung mit den Montageelementen die maximale Ausdehnung in Richtung parallel zu der horizontalen Längsrichtung aufweist.

Ferner ist hinsichtlich der Fläche, in welcher sich die zugsteife Tragstruktur erstreckt keine nähere Spezifizierung erfolgt.

So sieht eine vorteilhafte Lösung vor, dass die zugsteife Tragstruktur sich in einer ungefähr parallel zur horizontalen Längsrichtung verlaufenden Fläche erstreckt.

Unter einem ungefähr parallelen Verlauf dieser Fläche ist dabei zu verstehen, dass die Fläche mit der horizontalen Richtung einen Winkel von maximal ± 20° einschließt.

Ferner wurde im Zusammenhang mit der Erläuterung der zugsteifen Tragstruktur nicht näher deren Aufbau spezifiziert.

So ist vorzugsweise vorgesehen, dass die zugsteife Tragstruktur zwei zwischen den Endbereichen und dem Mittelbereich verlaufende Strukturarme aufweist, die mindestens in dem Mittelbereich miteinander verbunden sind.

Ferner sind die Strukturarme vorzugsweise auch an den Endbereichen der zugsteifen Tragstruktur miteinander verbunden.

Eine besonders vorteilhafte Ausführungsform der Strukturarme sieht vor, dass diese als in der ungefähr parallel zur horizontalen Längsrichtung verlaufenden Fläche liegende Flachstreben, insbesondere in Fahrtrichtung vordere und in Fahrtrichtung hintere Flachstreben, ausgebildet sind.

Hinsichtlich der Ausbildung der obenliegenden Tragstruktur und der untenliegenden Tragstruktur wurde bislang nicht näher spezifiziert, welche derselben die schwerpunktmäßig torsionssteife und welche derselben die schwerpunktmäßig zugsteife Tragstruktur sein soll.

So sieht eine vorteilhafte Lösung vor, dass die obenliegende Tragstruktur die schwerpunktmäßig torsionssteife Tragstruktur und die untenliegende Tragstruktur die schwerpunktmäßig zugsteife Tragstruktur ist.

Alternativ dazu ist aber auch die umgekehrte Anordnung vorgesehen. Hinsichtlich der Fixierung der Lagereinheit an den einzelnen Tragstrukturen wurden bislang keine näheren Angaben gemacht.

So sieht eine vorteilhafte Lösung vor, dass die Lagereinheit sowohl mit der obenliegenden Tragstruktur als auch der untenliegenden Tragstruktur verbunden ist.

Besonders günstig ist es, wenn die Lagereinheit zwischen den Tragstrukturen angeordnet ist, dass sich dadurch eine besonders raumsparende Lösung ergibt.

Prinzipiell könnte die Lagereinheit direkt mit den Tragstrukturen verbunden sein.

Eine besonders vorteilhafte Lösung sieht jedoch vor, dass die Lagereinheit an einer mit den Tragstrukturen verbundenen Montageeinheit gehalten ist, so dass dadurch die Lagereinheit auswechselbar ist, während vorzugsweise die Montageeinheit fest mit den Tragstrukturen verbunden, insbesondere verschweißt oder verlötet ist.

Besonders günstig ist es, wenn sich die Montageeinheit zwischen der zugsteifen Tragstruktur und der torsionssteifen Tragstruktur erstreckt und sowohl mit den Mittelbereichen der zugsteifen Tragstruktur als auch der torsionssteifen Tragstruktur fest verbunden ist, so dass sich dadurch ebenfalls eine sehr kompakte Bauweise der Querträgereinheit ergibt.

Weitere Merkmale und Vorteile der erfindungsgemäßen Lösung sind Gegenstand der nachfolgenden Beschreibung sowie der zeichnerischen Darstellung eines Ausführungsbeispiels.

In der Zeichnung zeigen:
- Fig. 1: eine Darstellung eines Kraftfahrzeugs, insbesondere eines Personenkraftfahrzeugs in einer Ansicht in Fahrtrichtung von hinten mit der erfindungsgemäßen Anhängekupplung, wobei eine Stoßfängereinheit des Kraftfahrzeugs teilweise aufgebrochen dargestellt ist;
- Fig. 2: eine vergrößerte Ansicht ähnlich Fig. 1 der erfindungsgemäßen Anhängekupplung mit Blick in Fahrtrichtung;
- Fig. 3: eine perspektivische Darstellung der erfindungsgemäßen Anhängekupplung mit Blick in Fahrtrichtung von links oben;
- Fig. 4: eine perspektivische Darstellung der erfindungsgemäßen Anhängekupplung mit Blick in Fahrtrichtung von rechts oben und
- Fig. 5: eine vergrößerte Darstellung einer Montageeinheit der erfindungsgemäßen Anhängekupplung.

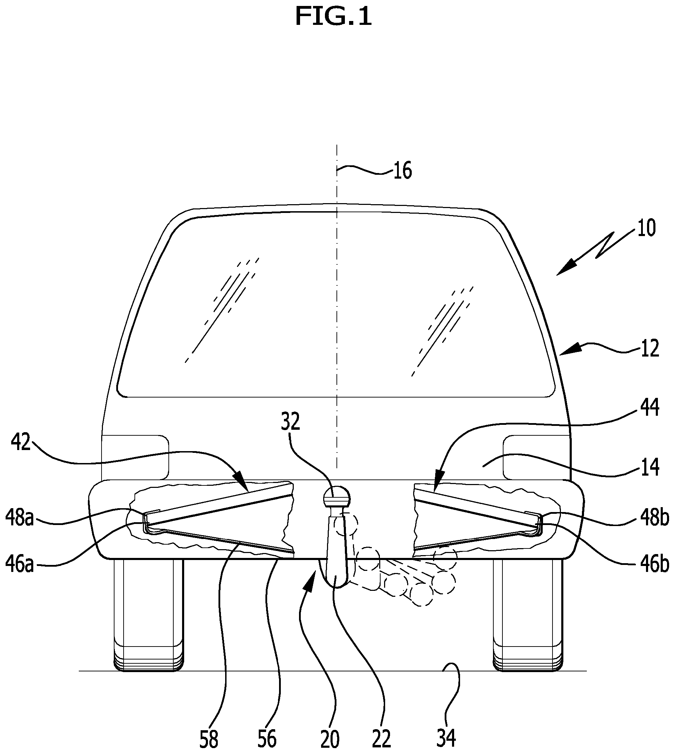

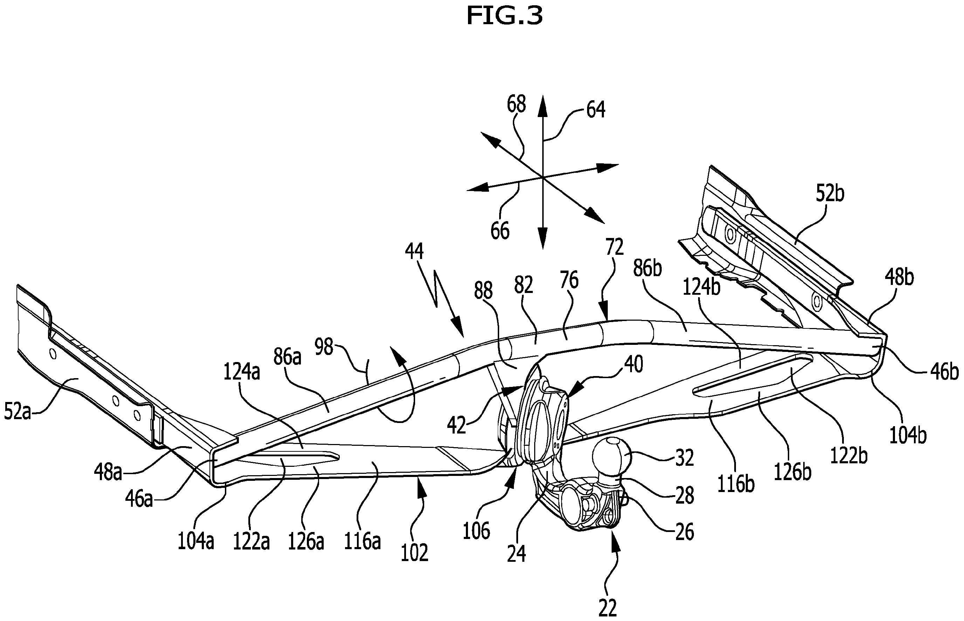

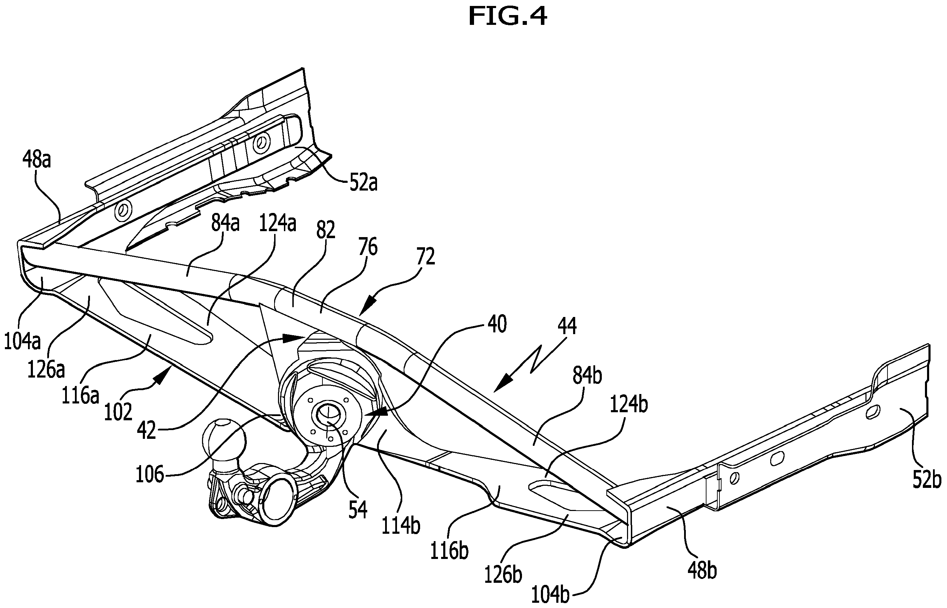

Ein in Fig. 1 dargestelltes und als Ganzes mit 10 bezeichnetes Personenkraftfahrzeug umfasst eine Fahrzeugkarosserie 12, die an einem Heckbereich 14 eine Anhängekupplung 20 trägt, welche wie in Fig. 1 bis 4 dargestellt, einen Kugelhals 22 aufweist, der sich von einem fahrzeugzugewandten ersten Endbereich 24 zu einem fahrzeugabgewandten zweiten Endbereich 26 erstreckt, wobei an dem zweiten Endbereich 26 ein Kugelansatz 28 angeordnet ist, auf welchem eine Kupplungskugel 32 sitzt, die somit über den Kugelansatz 28 mit dem zweiten Endbereich 26 des Kugelhalses 22 verbunden ist.

Der erste Endbereich 24 des Kugelhalses 22 ist über eine als Ganzes mit 40 bezeichnete Lagereinheit mit einer fahrzeugseitigen Montageeinheit 42 verbunden, welche mittels einer Querträgereinheit 44 mit dem Heckbereich 14 der Fahrzeugkarosserie 12 verbunden ist.

Beispielsweise ist die Querträgereinheit 44, die sich quer zu einer zu einer Fahrbahn 34 vertikalen Längsmittelebene 16 der Fahrzeugkarosserie 12 erstreckt und an ihren Endbereichen 46a, 46b mittels Montageelementen 48a, 48b, beispielsweise beiderseits der Längsmittelebene 16 und parallel zu dieser verlaufende Längsträgern 48a, 48b, mit dem Heckbereich 14 verbunden, wobei die Montageelemente 48a, 48b einerseits mit den Endbereichen 46a, 46b und andererseits mit Karosserieabschnitten 52a, 52b des Heckbereichs 14 verbunden sind.

Insbesondere ist die Lagereinheit 40 im einfachsten Fall so ausgebildet, dass sie eine starre Verbindung zwischen dem ersten Endbereich 24 des Kugelhalses 22 und der Montageeinheit 42 herstellt.

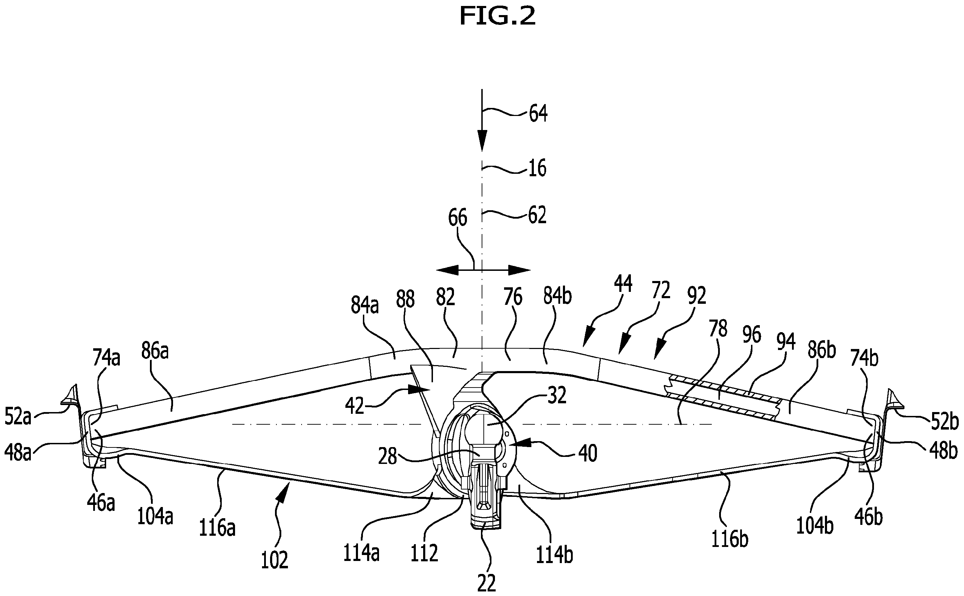

Im in Fig. 1 und 2 dargestellten Ausführungsbeispiel ermöglicht die Lagereinheit 40 ein Schwenken des Kugelhalses 22 um eine fahrzeugfest angeordnete, jedoch relativ zu der vertikalen Längsmittelebene 16 schräg, insbesondere in einem spitzen Winkel, verlaufende Schwenkachse 54, so dass wie in Fig. 1 dargestellt, der Kugelhals 22 unter einer Unterkante 56 einer heckseitigen Stoßfängereinheit 58 hindurch bewegbar ist und in einem Zwischenraum zwischen der Stoßfängereinheit 58 und dem Heckbereich 14 der Karosserie 12 in einer Ruhestellung positionierbar ist, während in der in Fig. 1 dargestellten Arbeitsstellung sich der Kugelhals 22 im Wesentlichen parallel zur Längsmittelebene 16 erstreckt, zumindest jedoch so verläuft, dass in der Arbeitsstellung eine vertikale Mittelachse 62 der Kupplungskugel 32 gleichzeitig eine Mittelachse des Kugelansatzes 28 darstellt und diese Mittelachse 62 in der vertikalen Längsmittelebene 16 der Karosserie 12 liegt. Derartige Lagereinheiten 40 mitsamt den dazugehörigen Verriegelungsvorrichtungen sind beispielsweise in den europäischen Patentanmeldungen EP 1 142 732 A, EP 1 741 572 A, EP 1 886 847 A, EP 2 141 034 A, EP 2 261 066 A, EP 2 567 837 A im Detail beschrieben.

Die Querträgereinheit 44 umfasst eine bezogen auf eine vertikale Richtung 64 obenliegende Tragstruktur 72, die sich zwischen äußeren Endbereichen 74a und 74b derselben erstreckt, wobei die äußeren Endbereiche 74a und 74b der obenliegenden Tragstruktur 72 in den Endbereichen 46a und 46b der Querträgereinheit liegen und insbesondere symmetrisch zur Längsmittelebene 16 angeordnet sind.

Zwischen den äußeren Endbereichen 74a und 74b der obenliegenden Tragstruktur 72 liegt ein Mittelbereich 76, der ebenfalls beispielsweise symmetrisch zur Längsmittelebene 16 ausgebildet ist.

Vorzugsweise ist die obenliegende Tragstruktur 72 derart ausgeformt, dass der Mittelbereich 76 bezogen auf die vertikale Richtung 64 höher liegt als eine die Endbereiche 74a und 74b jeweils in gleicher Höhe schneidende Verbindungsebene 78 wobei der Mittelbereich 76 einen die Montageeinheit 42 haltenden Tragabschnitt 82 bildet, der über durch Biegungen 84a und 84b in Stützabschnitte 86a und 86b der oberen Tragstruktur übergeht, wobei die Stützabschnitte 86a und 86b sich bis zu den außenliegenden Endbereichen 74a und 84a erstrecken.

Ferner ist vorzugsweise der Tragabschnitt 82 mit einem Oberteil 88 der Montageeinheit 42 verbunden, so dass sich die Montageeinheit 82 ausgehend von dem Tragabschnitt 82 in vertikaler Richtung nach unten erstreckt.

Vorzugsweise ist die obenliegende Tragstruktur 72 als einteiliger Rohrkörper 92 ausgebildet, welcher sich zwischen den außenliegenden Endbereichen 74a und 74b als einstückiges Teil erstreckt und dabei sowohl die Stützabschnitte 86a und 86b als auch die Biegungen 84a und 84b und den Tragabschnitt 82 bildet.

Der Rohrkörper 92 umfasst dabei eine Rohrwand 94, welche einen Innenraum 96 des Rohrkörpers 92 umschließt.

Ferner liegt der Rohrkörper 92 in einer parallel zur vertikalen Richtung 64 verlaufenden Fläche, die insbesondere symmetrisch zur Längsmittelebene 16 ausgebildet ist und im einfachsten Fall senkrecht zur Längsmittelebene 16 verläuft, gegebenenfalls jedoch ausgehend von der Längsmittelebene 16 entweder in Fahrtrichtung des Kraftfahrzeugs oder entgegengesetzt zur Fahrtrichtung des Kraftfahrzeugs verlaufende Biegungen oder Krümmungen aufweisen kann.

Die obenliegende Tragstruktur 72 ist somit insbesondere so ausgebildet, dass sie sowohl in der vertikalen Richtung 64 wirkende Kräfte als auch in einer senkrecht zur vertikalen Längsmittelebene 16 verlaufenden horizontalen Querrichtung 66 wirkenden Kräfte als auch in einer parallel zur vertikalen Längsmittelebene 16 und senkrecht zur vertikalen Richtung 64 verlaufenden horizontalen Längsrichtung 68 verlaufende Kräfte aufnehmen kann.

Zusätzlich ermöglicht die Ausbildung der obenliegenden Tragstruktur 72 als Rohrkörper 92 auch noch die Aufnahme von Torsionskräften 98, die die Tendenz haben, den Mittelbereich 76 der obenliegenden Tragstruktur 72 relativ zu den Endbereichen 74a, 74b zu verdrehen.

Darüber hinaus umfasst die Querträgereinheit 44 eine in der vertikalen Richtung 64 unterhalb der obenliegenden Tragstruktur 72 verlaufende untenliegende Tragstruktur 102, die sich ebenfalls zwischen außenliegenden Endbereichen 104a und 104b erstreckt und einen relativ zu den Endbereichen 104a, 104b in der vertikalen Richtung 64 tieferliegenden, insbesondere auch in vertikaler Richtung 64 unterhalb der Verbindungsebene 78 liegenden Mittelbereich 106 aufweist, und ein in dem Mittelbereich 106 liegenden Halteabschnitt 112 umfasst, welcher beispielsweise als Bestandteil der Montageeinheit 44 ausgebildet ist.

Von dem Halteabschnitt 112 ausgehend verlaufen Biegeabschnitte 114a und 114b zu sich jeweils zu den außenliegenden Endbereichen 104a und 104b erstreckenden Stabilisierungsabschnitten 116a und 116b der untenliegenden Tragstruktur 102, wobei insbesondere die Stabilisierungsabschnitte 116a und 116b flächenhaft ausgebildet sind und sich in einer Ausdehnungsfläche erstrecken, die im Wesentlichen flächenhaft parallel zur horizontalen Längsrichtung 68 verläuft.

Unter einer im Wesentlichen zur horizontalen Längsrichtung 68 parallelen Verlauf der Ausdehnungsfläche ist dabei ein Verlauf zu verstehen, der einen Winkel von maximal ± 20° mit der horizontalen Längsrichtung 68 einschließen kann.

Dabei ist vorzugsweise die Ausdehnung der Stabilisierungsabschnitte 116a, 116b in Richtung parallel zur horizontalen Längsrichtung 88 im Bereich der äußeren Endbereiche 104a, 104b größer als am Übergang zu den Biegeabschnitten 114a, 114b, vorzugsweise ist die Ausdehnung der Stabilisierungsabschnitte 116a, 116b an den äußeren Endbereichen 104a, 104b der untenliegenden Tragstruktur 102 maximal und am Übergang zu den Biegeabschnitten 114a, 114b minimal.

Vorzugsweise sind die Stabilisierungsabschnitte 116a, 116b aus einem Flachmaterial ausgebildet, das in der Ausdehnungsfläche einen näherungsweise dreieckförmigen Verlauf aufweist, wobei dieses Flachmaterial durch zentrale Ausnehmungen 122a, 122b in den jeweiligen Stabilisierungsabschnitten 116a, 116b die Stabilisierungsabschnitte 116a, 116b in jeweils eine in Fahrtrichtung vorne liegende Flachstrebe 124a, 124b und eine entgegengesetzt zur Fahrtrichtung hintere Flachstrebe 126a, 126b unterteilt, die beide in der Ausdehnungsfläche liegen und sich ausgehend von den äußeren Endbereichen 104a, 104b der untenliegenden Tragstruktur 102 in Richtung des Mittelbereichs 106 erstrecken und spätestens bei Erreichen des Mittelbereichs 106 ineinander übergehen.

Bei möglichen Ausführungsformen erfindungsgemäßen Lösung sind zur Bildung der mit den Montageelementen 48a, 48b verbundenen Endbereiche 46a, 46b der Querträgereinheit 44 entweder die außenliegenden Endbereiche 74a, 74b der obenliegenden Tragstruktur 72 mit den außenliegenden Endbereichen 104a, 104b der untenliegenden Tragstruktur 102 fest miteinander verbunden, das heißt beispielsweise verschweißt, oder die außenliegenden Endbereiche 74a, 74b der obenliegenden Tragstruktur 72 und die außenliegenden Endbereiche 104a, 104b der untenliegenden Tragstruktur 102 sind jeweils fest mit den Montageelementen 48a und 48b verbunden.

Bei der in den Fig. 2 bis 4 dargestellten vorteilhaften Ausführungsform der erfindungsgemäßen Lösung sind die Montageelemente 48a, 48b beispielsweise als sich parallel zur Fahrtrichtung erstreckende und mit den Karosserieabschnitten 52a, 52b verbundene Längsträger ausgebildet, die ihrerseits durch ein zumindest abschnittsweise im Querschnitt U-förmig gebogenes Flachmaterial gebildet sind, wobei an diese Längsträger aus Flachmaterial die Stabilisierungsabschnitte 116a, 116b aus Flachmaterial einstückig angeformt sind und auch die Biegeabschnitte 114a, 114b einstückig an das Flachmaterial der Stabilisierungsabschnitte 116a, 116b angeformt sind.

In diesem Fall besteht lediglich die Notwendigkeit, die äußeren Endbereiche 74a und 74b der obenliegenden Tragstruktur 52 fest mit den außenliegenden Endbereichen 104a, 104b der untenliegenden Tragstruktur 102 zu verbinden, so dass dadurch sowohl eine Verbindung mit den Längsträgern 48a und 48b als auch mit der untenliegenden Tragstruktur 102 erfolgt.

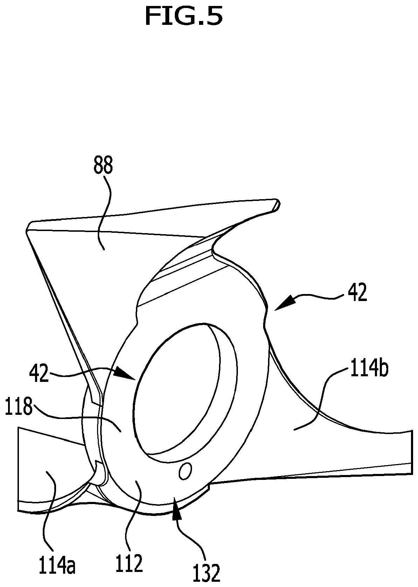

Wie in Fig. 5 dargestellt, sind die Biegeabschnitte 114a und 114b der untenliegenden Tragstruktur 102 mit dem Halteabschnitt 112 verbunden, der durch einen untenliegenden Teilbereich der Montageeinheit 42 gebildet ist. Vorzugsweise wird dabei die Montageeinheit 42 durch einen Ringkörper 132 gebildet, an welchem die als Ganzes mit 40 bezeichnete Lagereinheit montiert ist und an diesen Ringkörper 132 ist das Oberteil 88 angeformt, das mit dem Tragabschnitt 82 der obenliegenden Tragstruktur 72 fest verbunden ist, und außerdem bildet ein untenliegender Teilbereich des Ringkörpers 132 den Halteabschnitt 112.

Durch die Ausbildung des Ringkörpers 132 besteht die Möglichkeit, die Biegeabschnitte 114a, 114b so zu formen, dass diese fest mit dem Ringkörper 132 verbunden, beispielsweise verschweißt werden.

Insgesamt liegt somit die Montageeinheit 42 zwischen dem Mittelbereich 76 der obenliegenden Tragstruktur 72 und dem Mittelbereich 106 der unterliegenden Tragstruktur 102, so dass die Stützabschnitte 86a, 86b und die Stabilisierungsabschnitte 116a, 116b näherungsweise entlang von Längsseiten einer zwischen den Montageelementen 48a, 48b liegenden Raute verlaufen und dadurch die Montageeinheit 42 relativ zu den Montageelementen 48a, 48b stabil abstützen.

## Patentansprüche

1. Anhängekupplung (20) umfassend eine an einem Heckbereich (14) einer Fahrzeugkarosserie (12) eines Personenkraftwagens montierbare und sich quer zu einer Längsrichtung der Fahrzeugkarosserie (12) erstreckende Querträgereinheit (44) und eine von der Querträgereinheit (44) gehaltene Lagereinheit (40), mittels welcher ein Kugelhals (22) mit einer Kupplungskugel (32) an der Querträgereinheit (44) gehalten ist, wobei die Querträgereinheit (44) in ihren beiden äußeren, einander gegenüberliegenden Endbereichen (46a, 46b) mit Montageelementen (48a,48b) verbunden ist, mit welchen eine Fixierung der Querträgereinheit (44) an dem Heckbereich (14) erfolgt, wobei die Querträgereinheit (44) eine in vertikaler Richtung (64) gesehen obenliegende Tragstruktur (72) und eine in der vertikalen Richtung (64) tiefer als die obenliegende Tragstruktur (72) angeordnete untenliegende Tragstruktur (102) aufweist, dass die Tragstrukturen (72, 102) an ihren einander gegenüberliegenden äußeren Endbereichen (74a, 74b, 104a, 104b) jeweils mit den Montageelementen (48a, 48b) verbunden sind und in einem Mittelbereich (76, 106) die Lagereinheit (40) tragen,
**dadurch gekennzeichnet, dass** eine der Tragstrukturen (72) als schwerpunktmäßig torsionssteife, einen Strukturinnenraum (96) mindestens teilweise umschließende Tragstruktur ausgebildet ist, und dass die torsionssteife Tragstruktur (72) zumindest abschnittsweise rohrförmig ausgebildet ist, dass die andere der Tragstrukturen (102) als schwerpunktmäßig in Fahrtrichtung zugsteife Tragstruktur ausgebildet ist, dass die zugsteife Tragstruktur (102) als flächenhafte Tragstruktur ausgebildet ist, die quer zur vertikalen Richtung (64) verläuft und dass die zugsteife Tragstruktur (102) an den äußeren Endbereichen (104a, 104b) eine größere Flächenausdehnung in einer horizontalen Längsrichtung (68) aufweist als in dem Mittelbereich (106).

2. Anhängekupplung nach Anspruch 1, **dadurch gekennzeichnet, dass** ein Abstand der Tragstrukturen (72, 102) zwischen den außenliegenden Endbereichen (74a, 74b, 104a, 104b) derselben minimal und zwischen den Mittelbereichen (76, 106) maximal ist.

3. Anhängekupplung nach Anspruch 1 oder 2, **dadurch gekennzeichnet, dass** der Mittelbereich (76) der obenliegenden Tragstruktur (72) in vertikaler Richtung (64) höher liegt als deren außenliegende Endbereiche (74a, 74b).

4. Anhängekupplung nach einem der voranstehenden Ansprüche, **dadurch gekennzeichnet, dass** die obenliegende Tragstruktur (72) zwischen deren außenliegenden Endbereichen (74a, 74b) näherungsweise bogenförmig verläuft.

5. Anhängekupplung nach einem der voranstehenden Ansprüche, **dadurch gekennzeichnet, dass** die obenliegende Tragstruktur (72) ausgehend von deren Endbereichen (74a, 74b) im Wesentlichen gestreckt in Richtung ihres Mittelbereichs (76) verläuft.

6. Anhängekupplung nach einem der voranstehenden Ansprüche, **dadurch gekennzeichnet, dass** ein Mittelbereich (106) der untenliegenden Tragstruktur (102) in vertikaler Richtung tiefer liegt als deren äußere Endbereiche (104a, 104b).

7. Anhängekupplung nach einem der voranstehenden Ansprüche, **dadurch gekennzeichnet, dass** die untenliegende Tragstruktur (102) zwischen den außenliegenden Endbereichen (104a, 104b) näherungsweise bogenförmig verläuft.

8. Anhängekupplung nach einem der voranstehenden Ansprüche, **dadurch gekennzeichnet, dass** die untenliegende Tragstruktur (102) ausgehend von deren äußeren Endbereichen (104a, 104b) gestreckt in Richtung ihres Mittelbereichs (106) verläuft.

9. Anhängekupplung nach einem der voranstehenden Ansprüche, **dadurch gekennzeichnet, dass** die torsionssteife Tragstruktur (72) über ihre ganze Länge rohrförmig ausgebildet ist.

10. Anhängekupplung nach einem der voranstehenden Ansprüche, **dadurch gekennzeichnet, dass** insbesondere die zugsteife Tragstruktur (102) ausgehend von den von den äußeren Endbereichen (104a, 104b) mit zunehmender Erstreckung in Richtung des Mittelbereichs (106) eine abnehmende Ausdehnung in der horizontalen Längsrichtung (68) aufweist, und dass insbesondere die zugsteife Tragstruktur (102) im Bereich einer Verbindung mit den Montageelementen (48a, 48b) die maximale Ausdehnung in Richtung parallel zu der horizontalen Längsrichtung (68) aufweist.

11. Anhängekupplung nach einem der voranstehenden Ansprüche, **dadurch gekennzeichnet, dass** die zugsteife Tragstruktur (102) sich in einer ungefähr parallel zur horizontalen Längsrichtung (68) verlaufenden Fläche erstreckt, und dass insbesondere die Fläche mit der horizontalen Längsrichtung (64) einen Winkel von maximal ± 20° einschließt.

12. Anhängekupplung nach einem der voranstehenden Ansprüche, **dadurch gekennzeichnet, dass** die zugsteife Tragstruktur (102) zwei zwischen den Endbereichen (104a, 104b) und dem Mittelbereich (106) verlaufende Strukturarme (124a, 124b, 126a, 126b) aufweist, die mindestens in dem Mittelbereich (106) miteinander verbunden sind.

13. Anhängekupplung nach einem der voranstehenden Ansprüche, **dadurch gekennzeichnet, dass** die obenliegende Tragstruktur (72), die schwerpunktmäßig torsionssteife Tragstruktur (72) und die untenliegende Tragstruktur (102) die schwerpunktmäßige zugsteife Tragstruktur (102) ist.

14. Anhängekupplung nach einem der voranstehenden Ansprüche, **dadurch gekennzeichnet, dass** die Lagereinheit (40) sowohl mit der obenliegenden Tragstruktur (72) als auch der untenliegenden Tragstruktur (102) verbunden ist, und dass insbesondere die Lagereinheit (40) zwischen den Tragstrukturen (72, 102) angeordnet ist.

15. Anhängekupplung nach einem der voranstehenden Ansprüche, **dadurch gekennzeichnet, dass** die Lagereinheit (40) an einer mit den Tragstrukturen (72, 102) verbundenen Montageeinheit (42) gehalten ist, und dass insbesondere die Montageeinheit (42) sich zwischen der zugsteifen Tragstruktur (102) und der torsionssteifen Tragstruktur (72) erstreckt und sowohl mit den Mittelbereichen (106, 76) der zugsteifen Tragstruktur (102) als der torsionssteifen Tragstruktur (72) fest verbunden ist.

## Claims

1. A trailer coupling (20) comprising a cross member unit (44), which is mountable on a tail region (14) of a vehicle body (12) of a passenger vehicle, and which extends transverse to a longitudinal direction of the vehicle body (12), and a bearing unit (40) held by the cross member unit (44), by means of which bearing unit a ball neck (22) with a coupling ball (32) is held on the cross member unit (44), wherein the cross member unit (44) is connected in its two outer, mutually opposed end regions (46a, 46b) to mounting elements (48a, 48b) by means of which the cross member unit (44) is fixed to the tail region (14), wherein the cross member unit (44) has an upper supporting structure (72) as considered in the vertical direction (64) and a lower supporting structure (102) arranged lower down than the upper supporting structure (72) in the vertical direction (64), wherein the supporting structures (72, 102) are each connected at their mutually opposed outer end regions (74a, 74b, 104a, 104b) to the mounting elements (48a, 48b) and in a central region (76, 106) carry the bearing unit (40), **characterised in that** one of the supporting structures (72) is formed as a supporting structure that is primarily torsionally-stiff and at least partially surrounds a structure interior (96), and **in that** the torsionally-stiff supporting structure (72) is tubular at least in sections, **in that** the other of the supporting structures (102) is formed as a supporting structure that is primarily tensile-stiff in the direction of travel, **in that** the tensile-stiff supporting structure (102) is formed as a planar supporting structure, which runs transversely to the vertical direction (64), and **in that** the tensile-stiff supporting structure (102), at the outer end regions (104a, 104b), has a greater areal extent in a horizontal longitudinal direction (68) than in the central region (106).

2. A trailer coupling according to claim 1, **characterised in that** a spacing of the supporting structure (72, 102) between the outer end regions (74a, 74b, 104a, 104b) thereof is minimal and between the central regions (76, 106) is maximal.

3. A trailer coupling according to claim 1 or 2, **characterised in that** the central region (76) of the upper supporting structure (72) is higher in the vertical direction (64) than the outer end regions (74a, 74b) of said supporting structure.

4. A trailer coupling according to any one of the preceding claims, **characterised in that** the upper supporting structure (72) runs approximately arcuately between the outer end regions (74a, 74b) thereof.

5. A trailer coupling according to any one of the preceding claims, **characterised in that** the upper supporting structure (72), starting from the end regions (74a, 74b) thereof, runs substantially elongated in the direction of its central region (76).

6. A trailer coupling according to any one of the preceding claims, **characterised in that** a central region (106) of the lower supporting structure (102) lies lower in the vertical direction than the outer end regions (104a, 104b) thereof.

7. A trailer coupling according to any one of the preceding claims, **characterised in that** the lower supporting structure (102) runs approximately arcuately between the outer end regions (104a, 104b).

8. A trailer coupling according to any one of the preceding claims, **characterised in that** the lower supporting structure (102), starting from the outer end regions (104a, 104b) thereof, runs elongated in the direction of its central region (106).

9. A trailer coupling according to any one of the preceding claims, **characterised in that** the torsionally-stiff supporting structure (72) is tubular over its entire length.

10. A trailer coupling according to any one of the preceding claims, **characterised in that** in particular the tensile-stiff supporting structure (102), starting from the outer end regions (104a, 104b) and extending increasingly in the direction of the central region (106), has a decreasing extent in the horizontal longitudinal direction (68), and that in particular the tensile-stiff supporting structure (102) has the maximum extent in the direction parallel to the horizontal longitudinal direction (68) in the region of a connection to the mounting elements (48a, 48b).

11. A trailer coupling according to any one of the preceding claims, **characterised in that** the tensile-stiff supporting structure (102) extends in a plane running approximately parallel to the horizontal longitudinal direction (68).

12. A trailer coupling according to any one of the preceding claims, **characterised in that** the tensile-stiff supporting structure (102) has two structure arms (124a, 124b, 126a, 126b) running between the end regions (104a, 104b) and the central region (106), which structure arms are connected to one another at least in the central region (106).

13. A trailer coupling according to any one of the preceding claims, **characterised in that** the upper supporting structure (72) is the primarily torsionally-stiff supporting structure (72) and the lower supporting structure (102) is the primarily tensile-stiff supporting structure (102).

14. A trailer coupling according to any one of the preceding claims, **characterised in that** the bearing unit (40) is connected both to the upper supporting structure (72) and the lower supporting structure (102), and **in that** in particular the bearing unit (40) is arranged between the supporting structures (72, 102).

15. A trailer coupling according to any one of the preceding claims, **characterised in that** the bearing unit (40) is held on a mounting unit (42) connected to the supporting structures (72, 102) and **in that** in particular the mounting unit (42) extends between the tensile-stiff supporting structure (102) and the torsionally-stiff supporting structure (72) and is fixedly connected to the central regions (106, 76) both of the tensile-stiff supporting structure (102) and of the torsionally stiff supporting structure (72).

## Revendications

1. Attelage de remorque (20) comprenant une unité de support transversale (44) pouvant être montée sur une zone arrière (14) d'une carrosserie de véhicule (12) d'un véhicule de tourisme et s'étendant de manière transversale par rapport à un sens longitudinal de la carrosserie de véhicule (12) et une unité de palier (40) maintenue par l'unité de support transversale (44), au moyen de laquelle un col de boule (22) avec une boule d'attelage (32) est maintenu sur l'unité de support transversale (44), dans lequel l'unité de support transversale (44) est reliée dans ses deux zones d'extrémité extérieures (46a, 46b) se faisant face l'uneà l'autre à des éléments de montage (48a, 48b), par lesquels une fixation de l'unité de support transversale (44) a lieu sur la zone arrière (14), dans lequel l'unité de support transversale (44) présente une structure porteuse située en haut (72) vue dans le sens vertical (64) et une structure porteuse située en bas (102) disposée dans une position inférieure dans le sens vertical (64) par rapport à la structure porteuse située en haut (72), que les structures porteuses (72, 102) se faisant face les unes les autres sont reliées respectivement aux éléments de montage (48a, 48b) sur leurs zones d'extrémité extérieures (74a, 74b, 104a, 104b) et supportent dans une zone centrale (76, 106) l'unité de palier (40),
**caractérisé en ce qu'**une des structures porteuses (72) est réalisée en tant que structure porteuse principalement raide en torsion, renfermant au moins en partie un espace intérieur de structure (96), et que la structure porteuse raide en torsion (72) est réalisée au moins par endroits en forme de tube, que l'autre des structures porteuses (102) est réalisée en tant que structure porteuse principalement raide en traction dans le sens de déplacement, que la structure porteuse raide en traction (102) est réalisée en tant que structure porteuse plate, qui s'étend de manière transversale par rapport au sens vertical (64), et que la structure porteuse raide en traction (102) présente sur les zones d'extrémité extérieures (104a, 104b) une extension de surface plus importante dans un sens longitudinal horizontal (68) que dans la zone centrale (106).

2. Attelage de remorque selon la revendication 1, **caractérisé en ce qu'**un espacement des structures porteuses (72, 102) est minimal entre les zones d'extrémité situées à l'extérieur (74a, 74b, 104a, 104b) de celles-ci et est maximal entre les zones centrales (76, 106).

3. Attelage de remorque selon la revendication 1 ou 2, **caractérisé en ce que** la zone centrale (76) de la structure porteuse située en haut (72) se situe plus en hauteur dans le sens vertical (64) que ses zones d'extrémité situées à l'extérieur (74a, 74b).

4. Attelage de remorque selon l'une quelconque des revendications précédentes, **caractérisé en ce que** la structure porteuse située en haut (72) s'étend entre ses zones d'extrémité située à l'extérieur (74a, 74b) approximativement en forme d'arc.

5. Attelage de remorque selon l'une quelconque des revendications, **caractérisé en ce que** la structure porteuse située en haut (72) s'étend en partant de ses zones d'extrémité (74a, 74b) sensiblement de manière étirée en direction de sa zone centrale (76).

6. Attelage de remorque selon l'une quelconque des revendications précédentes, **caractérisé en ce qu'**une zone centrale (106) de la structure porteuse située en bas (102) se situe dan uns position inférieure dans le sens vertical par rapport à ses zones d'extrémité extérieures (104a, 104b).

7. Attelage de remorque selon l'une quelconque des revendications précédentes, **caractérisé en ce que** la structure porteuse située en bas (102) s'étend entre les zones d'extrémité situées à l'extérieur (104a, 104b) approximativement en forme d'arc.

8. Attelage de remorque selon l'une quelconque des revendications précédentes, **caractérisé en ce que** la structure porteuse située en bas (102) s'étend en partant de ses zones d'extrémité extérieures (104a, 104b) de manière étirée en direction de sa zone centrale (106).

9. Attelage de remorque selon l'une quelconque des revendications précédentes, **caractérisé en ce que** la structure porteuse raide en torsion (72) est réalisée en forme de tube sur la totalité de sa longueur.

10. Attelage de remorque selon l'une quelconque des revendications précédentes, **caractérisé en ce qu'**en particulier la structure porteuse raide en traction (102) présente en partant des zones d'extrémité extérieures (104a, 104b) avec une extension croissante en direction de la zone centrale (106) un allongement décroissant dans le sens longitudinal horizontal (68), et qu'en particulier la structure porteuse raide en traction (102) présente, dans la zone d'une liaison aux éléments de montage (48a, 48b) l'allongement maximal en direction parallèle par rapport au sens longitudinal horizontal (68).

11. Attelage de remorque selon l'une quelconque des revendications précédentes, **caractérisé en ce que** la structure porteuse raide en traction (102) s'étend dans une surface s'étendant approximativement de manière parallèle par rapport au sens longitudinal horizontal (68).

12. Attelage de remorque selon l'une quelconque des revendications précédentes, **caractérisé en ce que** la structure porteuse raide en traction (102) présente deux bras de structure (124a, 124b, 126a, 126b) s'étendant entre les zones d'extrémité (104a, 104b) et la zone centrale (106), qui sont reliés entre eux au moins dans la zone centrale (106).

13. Attelage de remorque selon l'une quelconque des revendications précédentes, **caractérisé en ce que** la structure porteuse située en haut (72) est la structure porteuse principalement raide en torsion (72) et la structure porteuse située en bas (102) est la structure porteuse principalement raide en traction (102).

14. Attelage de remorque selon l'une quelconque des revendications précédentes, **caractérisé en ce que** l'unité de palier (40) est reliée à la fois à la structure porteuse située en haut (72) et à la structure porteuse située en bas (102), et qu'en particulier l'unité de palier (40) est disposée entre les structures porteuses (72, 102).

15. Attelage de remorque selon l'une quelconque des revendications précédentes, **caractérisé en ce que** l'unité de palier (40) est maintenue sur une unité de montage (42) reliée aux structures porteuses (72, 102), et qu'en particulier l'unité de montage (42) s'étend entre la structure porteuse raide en traction (102) et la structure porteuse raide en torsion (72) et est reliée de manière solidaire à la fois aux zones centrales (106, 76) de la structure porteuse raide en traction (102) et à la structure porteuse raide en torsion (72).
